(19) Europäisches Patentamt
European Patent Office
Office européen des brevets

(11) **EP 4 571 597 A1**

(12) **EUROPEAN PATENT APPLICATION**

(43) Date of publication:
**18.06.2025 Bulletin 2025/25**

(21) Application number: **23215895.6**

(22) Date of filing: **12.12.2023**

(51) International Patent Classification (IPC):
**G06N 10/40** (2022.01)    **G21K 1/00** (2006.01)

(52) Cooperative Patent Classification (CPC):
**G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Infineon Technologies Austria AG
9500 Villach (AT)**

(72) Inventors:
• **BRANDL, Matthias
85614 Kirchseeon (DE)**

• **REPP, Jens
85570 Markt Schwaben (DE)**
• **ABU ZAHRA, Mohammad Khalid Mohammad
80687 München (DE)**

(74) Representative: **Infineon Patent Department
Intellectual Property
Infineon Technologies AG
Postfach 22 16 44
80506 München (DE)**

Remarks:
Amended claims in accordance with Rule 137(2) EPC.

(54)  **AN ION TRAP DEVICE HAVING A SWITCHING DEVICE**

(57)    An electrode interface for driving an electrode of a quantum circuit in a trapped ion quantum computer. The electrode is selectively connectable to at least one signal line. Each signal line is connected to an intermediate node by a respective first switch. The intermediate node is connected to the electrode by a second switch. A buffer capacitor couples the intermediate node to a ground or reference voltage. To disconnect a signal line from the electrode, the second switch is opened, to effectively decouple the first switch(es) from the intermediate node, before the first switch connected to the relevant signal line is opened.

FIG. 3

**Description**

**TECHNICAL FIELD**

The present disclosure relates to the field of quantum computing, and in particular, to ion trap devices.

**BACKGROUND**

There is growing interest and rapid development in the field of quantum computing. One particular type of quantum computing environment is a trapped ion environment, in which computing is performed using ions as qubits for computation. The excitation state of an electron of an ion indicates a logical value or logic state. Ions such as barium (Ba), magnesium (Mg), calcium (Ca), beryllium (Be), or the like, may be positively charged, and a single electron in the outer shall of the ion used as the logic element. Two or more ions may be entangled, as changing the state of one qubit causes the entangled qubits to change their state immediately, having the potential to provide substantial speed and power savings over conventional computing.

Quantum computing requires a well-controlled environment, and precise handling of the ions. Generally, ions in a trapped ion device, also referred to as a trapped ion quantum computing (TIQC) system, are trapped or controlled using electromagnetic fields.

For example, ions may be moved between locations (e.g., storage, processing and readout locations) in a process called ion shuttling. In order to control the ion movement, electrodes are controlled to provide an intended electric field (E-field). Therefore, accurate control of the E-fields created by the electrodes in the trapped ion device is desired. For example, it would be advantageous to reduce any noise or other undesired fluctuations of voltage that is provided to the electrode, which may cause fluctuations of the E-field experienced by the ion(s), as the location and movement of the ion(s) may be sensitive even to subtle changes in the E-field provided by the electrode.

**SUMMARY**

There is proposed an ion trap device comprising at least one switching device for controlling a connection between one or more signal lines and a respective electrode of the ion trap device. Each switching device comprises one or more first switches, each first switch controllably connecting a respective, different one of the one or more signal lines to a same intermediate node; a second switch controllably connecting the intermediate node to the electrode of the ion trap device; and a control arrangement configured to controllably close and open each first switch and the second switch. The control arrangement of each switching device is configured to perform a disconnection process and/or a connection process. The disconnection process comprises opening the second switch. The connection process comprises closing at least one of the one or more first switches and after closing the at least one of the one or more first switches, closing the second switch.

**BRIEF DESCRIPTION OF THE DRAWINGS**

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.

Fig. 1 illustrates an electrode interface;
Fig. 2 illustrates voltage spikes when switching a signal line connected to an electrode;
Fig. 3 illustrates a proposed electrode interface;
Fig. 4 illustrates a proposed method;
Fig. 5 illustrates a switch design for use in a proposed electrode interface;
Fig. 6 illustrates another switch design for use in a proposed electrode interface;
Fig. 7 illustrates another proposed electrode interface;
Fig. 8 illustrates yet another proposed electrode interface;
Fig. 9 illustrates yet another proposed electrode interface;
Fig. 10 illustrates a proposed electrode interface arrangement;
Fig. 11 illustrates another proposed electrode interface arrangement;
Fig. 12 illustrates another proposed electrode interface;
Fig. 13 illustrates a portion of one example quantum circuit;
Fig. 14 illustrates a portion of another example quantum circuit;

Fig. 15 illustrates a portion of another example quantum circuit; and

Fig. 16 illustrates a portion of a quantum circuit.

## DETAILED DESCRIPTION

The examples described herein provide an electrode interface for driving an electrode of a quantum circuit. The electrode is selectively connectable to at least one signal line. Each signal line is connected to an intermediate node by a respective first switch. The intermediate node is connected to the electrode by a second switch. A buffer capacitor couples the intermediate node to a ground or reference voltage. To disconnect a signal line from the electrode, the second switch is opened, to effectively decouple the first switch(es) from the intermediate node, before the first switch connected to the relevant signal line is opened.

In an ion trap device, also known as a trapped ion quantum circuit (TIQC), there is commonly a desire to control the location of an ion that is being held within a containment region (e.g., by at least an RF system or by a magnetic field). This can be to facilitate movement of the ion between different locations, each designated for the performance of different quantum computing tasks (e.g., storage, processing and/or readout).

Moving an ion in a containment region of an ion trap device typically requires manipulating the electric field that surrounds the ion. Appropriate manipulation of the electric field surrounding the ion can therefore be used to control the location of the ion. There is therefore a need to facilitate precise and accurate control of the electric field surrounding an ion.

A typical ion trap device or TIQC will control the voltage provided to each of a plurality of electrodes surrounding or bounding the containment region in which the ion is to be held. By accurately controlling the voltage provided to each electrode, the electric field surrounding the ion can be manipulated or controlled, to thereby facilitate precise control over the position of the ion (with respect to the plurality of electrodes). Typically, with current state of the art technology for ion trap devices, the voltage required for each electrode is relatively high (>10V), in order to facilitate accurate control within the ion trap device environment. The precise required voltage(s) will depend on the geometry of the ion trap(s) and any/the trapping frequencies. Larger geometries and/or higher trapping frequencies generally require higher voltages.

There is a need to facilitate accurate and low-noise driving of electrodes of an ion trap device. Any unexpected or undesired change in the voltage at an electrode of an ion trap device can jostle, "shake" or otherwise affect the position of an ion that is trapped or manipulated by the ion trap device. In the context of ion trap devices, this effect is commonly called "heating", as it introduces phonons into the ion trap environment - requiring cooling of the ion trap for accurate control. More particularly, a sudden change or spike in voltage (even if very small in magnitude) can "shake" or "heat" the ion, which can cause the ion to escape a potential well in which it is held.

The present disclosure provides a mechanism for reducing or mitigating a risk of a sudden voltage change at an electrode for an ion trap device, particularly during a controlled or managed change in the desired voltage at the electrode of the ion trap device. This may reduce a risk of affecting an ion in the ion trap device. In particular, the present disclosure may provide a new switching device for an ion trap device.

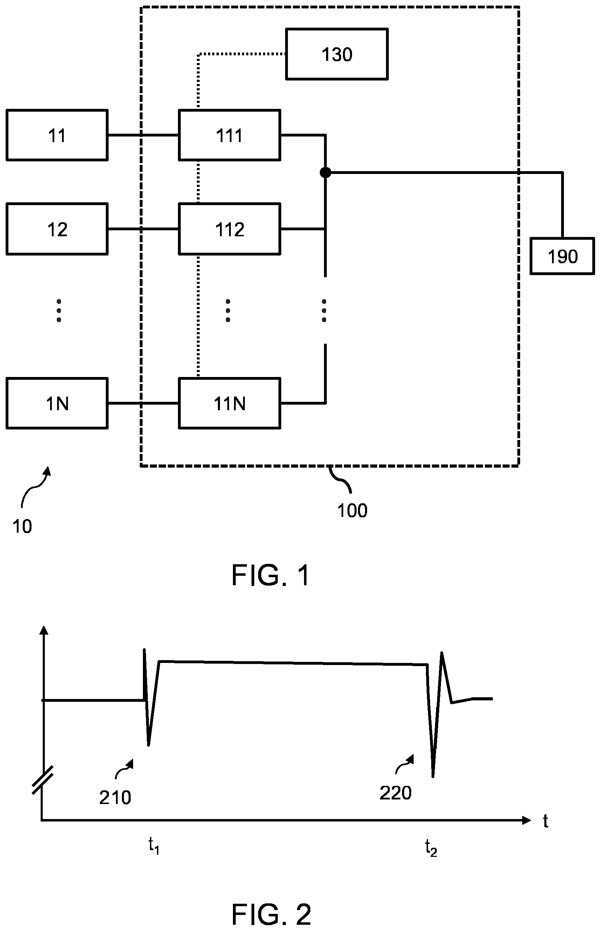

Fig. 1 illustrates an overview of an existing switching device 100 for controlling a connection between one or more signal lines 10 and an electrode 190 of an ion trap device. The switching device 100 comprises one or more first switches 111, 112, ..., 11N and a control arrangement 130.

In the illustrated example, the one or more signal lines 10 comprises a plurality of signal lines, 11, 12, ..., 1N. Thus, there are N signal lines, where N is any integer number. Each signal line may, for instance, be provided by a digital-to-analogue converter (DAC) that provides or defines a voltage for provision to the electrode 190 of the ion trap device. Each DAC may provide an adjustable voltage on its signal line.

Each first switch controllably connects a respective, different signal line 11, 12, ... 1N to the electrode 190. Thus, each first switch 111, 112, ..., 11N controls or defines a current flow from a respective signal line 11, 12, ..., 1N to the electrode 190. Each of the one or more first switches 111, 112, ..., 11N can be alternatively labelled a primary switch or a main switch.

The control arrangement 130 is configured to controllably close and open each switch. When a switch is closed, it permits or allows the flow of current therethrough. When a switch is open or opened, it prevents or restricts the flow of current therethrough. A closed switch may be considered to be "on" or in an on-state. An open or opened switch may be considered to be "off" or in an off-state.

The control arrangement 130 is configured to respond to an indication to open (a closed) one of the first switches 111, 112, ..., 11N. This indication may be provided as part of a control scheme for controlling or changing the voltage at the electrode 190. Responsive to this indication, the control arrangement 130 opens the first switch.

The electrode 190 may be connected to (e.g., form a plate of) an electrode capacitor $C_e$, e.g., connecting the electrode 190 to a ground GND or reference voltage. In other approaches, the electrode can be simply modelled as an electrode capacitors, e.g., representing an intrinsic capacitance of the electrode.

Fig. 2 illustrates the effect of charge injection in the switching device 300. In particular, Fig. 2 illustrates the voltage (V) at the electrode 190 over time (t) as a first switch (connected to electrode 190) is opened at a time $t_1$ and subsequently

reactivated at a time $t_2$.

In such a scenario, when a first switch is switched off (i.e., switched to an off-state) at a time $t_1$, there is a charge injection from the first switch towards the electrode. This is because a switch will have intrinsic (parasitic) capacitances between its terminals that need to be discharged when the switch is opened. When the switch is opened, such that no or negligible current is able to flow therethrough, then at least some of the charge(s) stored at these intrinsic capacitances will be discharged towards the electrode. This will cause the voltage at the electrode to undesirably change.

When the first switch is switched on (i.e., switched to an on-state) at a time $t_2$, there is a need to (re)charge the discharged intrinsic (parasitic) capacitances. Thus, charge or power is drawn from the electrode to charge at least some of the charge(s) stored at one or more of the intrinsic capacitances. This similarly causes the voltage at the electrode to undesirably change, due to the drawing of this charge. Once the switch is fully closed, the (now connected) signal line stabilizes the voltage at the electrode.

In between the times at which the first switch is switched off and switched on (between times $t_1$ and $t_2$), there will be a DC offset in the voltage at the electrode 190, as a result of the charge injection towards the electrode.

As previously explained, in the context of an ion trap device, any uncontrolled change in the voltage at an electrode leads to undesirable or uncontrolled movement of an ion whose position is controlled or manipulated through manipulation of an electric field using the electrode. In particular, any uncontrolled change will lead to undesirable shaking or heating of the ion.

By way of further example, consider a scenario in which each first switch comprises a n-channel MOSFET having a source, gate and drain. The source is connected to the signal line and the drain is connected to the electrode. The gate controls current flow between the signal line and the electrode (i.e., between the source and the drain), as is well established in the art. There will be an intrinsic gate-source capacitance ($C_{GS}$), an intrinsic gate-drain capacitance ($C_{GD}$) and an intrinsic drain-source capacitance ($C_{DS}$).

In this example, in a steady-state system when the first switch is initially closed, a gate-source voltage is at first voltage level, and the drain-source voltage is negligible (e.g., can be modelled as 0V). When the first switch is then opened, the gate-source voltage is ramped down or reduced (i.e., to 0 or near-zero). In doing so, the gate-source capacitance $C_{GS}$ and the gate-drain capacitance $C_{GD}$ have to be discharged. Initially, all charges can be absorbed by the signal line. However, the channel of the MOFSET will gradually become weaker (with reducing gate-source voltage) before it vanishes completely at a threshold voltage level of the gate-source voltage. Nonetheless, the gate-source voltage continues to still ramp down, to mitigate risk of (current) leakage from drain to source, or vice versa. Without a channel, the discharging of the gate-source capacitance $C_{GS}$ can continue to be absorbed by the signal line. However, as the charge of the gate-drain capacitance $C_{GD}$ can no longer escape through the channel, then the remaining charge must pass through to the electrode. This causes the voltage of the electrode to undesirably change.

Similarly, in a steady-state system when the first switch is initially opened, a gate-source voltage will be negligible (e.g., can be modelled as 0V). It can also be assumed that the drain-source voltage or zero or negligible. When the first switch is subsequently closed, the gate-source voltage is ramped up or increased (i.e., to the first voltage level). In doing so, the gate-source capacitance $C_{GS}$ and the gate-drain capacitance $C_{GD}$ have to be charged. The gate-source capacitance can be readily charged using the signal line. However, the charges for charging the gate-drain capacitance need to come from somewhere, i.e., the connected electrode. This will cause the voltage at the electrode to change as it supplies charge to the gate-drain capacitance during this time. Once the gate-source voltage is sufficiently high, such that a channel is formed, the charges at the electrode are resupplied from the signal line and the voltage at the electrode returns to the voltage provided by the signal line.

From the foregoing, it will be clear that in existing circuitry the deactivation of a first switch causes a first spike 210 in the voltage at the electrode. The activation of a first switch will cause a second spike 220 (generally opposite in polarity to the first spike 210).

One approach for reducing the charge injection to the voltage (upon activation or deactivation of any first switch) would be to reduce a gate capacitance, particularly a gate-drain capacitance, of each first switch. However, with current technological restrictions, reduced gate capacitance with an acceptable on-resistance (for the switch) is only possible for switches with a relatively low voltage rating (<10 V). Such transistors may be not suited for controlling a connection between a signal line for an electrode and any other node - i.e., for acting as a first switch - as they could become damaged during conventional use of the switching device.

The present disclosure may provide a mechanism for avoiding or mitigating the occurrence of the spikes and DC offsets.

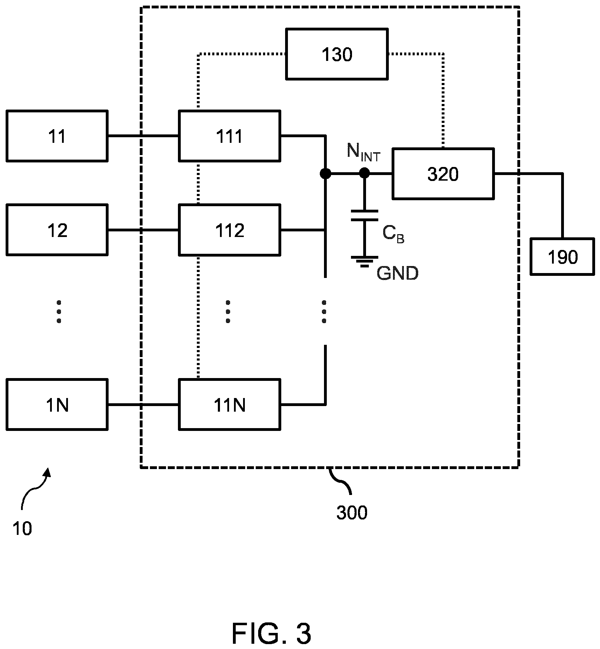

Fig. 3 illustrates a proposed switching device 300 for use in a proposed ion trap device. The ion trap device may comprise one or more such switching devices.

The switching device 300 comprises one or more first switches 111, 112, ..., 11N, a second switch 320, a (optional) buffer capacitor $C_B$ and a control arrangement 130. Thus, the proposed switching device 300 differs from the previously described switching device at least by virtue of the second switch 320 and, optionally, the buffer capacitor $C_B$.

The second switch 320 is connected between an intermediate node $N_{INT}$ and the electrode 190. Each first switch connects to the intermediate node $N_{INT}$. The buffer capacitor $C_B$ is connected between the intermediate node $C_B$ and a ground or reference voltage GND.

Each first switch 111, 112, ..., 11N is configured to controllably connect a respective, different signal line 11, 12, ... 1N to the same intermediate node $N_{INT}$. Thus, each first switch 111, 112, ..., 11N controls or defines a current flow from a respective signal line 11, 12, ..., 1N to the intermediate node $N_{INT}$. As previously mentioned, each of the one or more first switches 111, 112, ..., 11N can be alternatively labelled a primary switch or a main switch.

In the illustrated example, each signal line is connected to the intermediate node $N_{INT}$ via a respective first switch 111, 112, ..., 11N. However, this is not essential and, in alternative approaches, only a subset (i.e., not all) of the signal lines are connected to the intermediate node via a respective first switch.

The second switch 320 controllably connects the intermediate node $N_{INT}$ to the electrode 190. Thus, the second switch controls a current flow from the intermediate node $N_{INT}$ to the electrode 190. Alternative labels for the second switch 320 include an isolating switch or a decoupling switch, for reasons which will become clear later in the description.

The buffer capacitor $C_B$, when present, is configured to charge to a voltage level provided by any signal line connected to the intermediate node $N_{INT}$ when connected thereto by a respective first switch.

The control arrangement 130 is configured to controllably close and open each switch. When a switch is closed, it permits or allows the flow of current therethrough. When a switch is opened, it prevents or restricts the flow of current therethrough. A closed switch may be considered to be "on" or in an on-state. An opened switch may be considered to be "off" or in an off-state.

The control arrangement 130 is configured to respond to an indication to open (a closed) one of the first switches 111, 112, ..., 11N. This indication may be provided as part of a control scheme for controlling or changing the voltage at the electrode 190. Responsive to this indication, the control arrangement 130 opens the second switch before opening the first switch. In this way, the intermediate node $N_{INT}$ is isolated or decoupled from the electrode 190 before the (indicated) first switch is opened. Thus, the second switch 320 acts as an isolating or decoupling switch.

This approach reduces or avoids any charge injection that results from a deactivation of the first switch from passing through to the electrode. This significantly reduces any (sudden) change in voltage at the electrode 190.

More particularly, the proposed approach acts to decouple the electrode 190 from the first switch(es) 111, 112, ..., 11N before opening or closing any one of the first switches. More particularly, to disconnect a signal line from the electrode 190, first, the second switch is opened to isolate the first switch(es), then, the relevant first switch is opened. This will lead to charge injection into the intermediate node between the first switch(es) and the second switch.

It is recognized that the voltage at this node will change which may disadvantageously couple capacitively to the electrode (e.g., via the drain-source capacitance of the second switch) and/or damage the second switch. The provision of the optional buffer capacitor $C_b$ connected to the intermediate node limits the voltage rise at the intermediate node.

In other examples, the buffer capacitor $C_b$ may be omitted. In such instances, a parasitic capacitance as the intermediate node may perform the same/similar function to the dedicated buffer capacitor $C_b$.

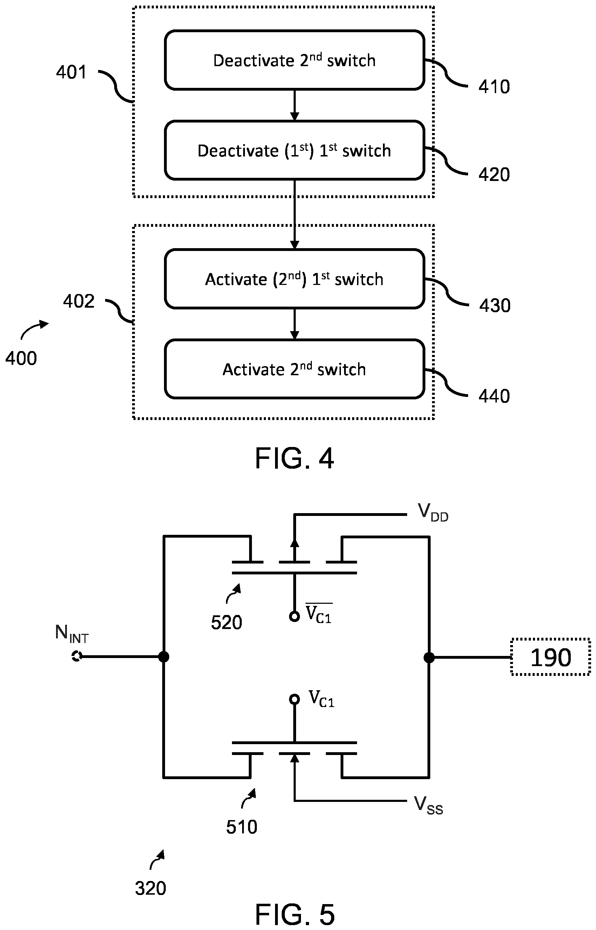

Fig. 4 is a flowchart illustrating a method 400 for controlling a connection between one or more signal lines and an electrode of an ion trap device using the switching device 300. The method 400 is performed using the control arrangement 130 of the switching device.

With continued reference to Fig. 3, the method 400 is configured for switching which signal line 11,12, ..., 1N is connected to the electrode 190 from a first signal line to a second signal line. The method 400 includes a disconnection process 401 for disconnecting the electrode from the signal line(s) (which here includes a step of opening one of the first switches) and a connection process 402 for closing (another) one of the first switches. The disconnection process 401 and the connection process 402 represent example methods or processes that can be performed by the control arrangement 130.

The method 400 comprises a step 410 of opening the second switch 320. Step 410 may, for instance, be performed responsive to an indication to open a closed one of the first switches (e.g., an indication to switch which signal line defines the voltage at/to the electrode).

Step 410 is, by itself, an example of a disconnection process that may be performed by the control arrangement for disconnecting the electrode from the signal line(s).

The method 400 subsequently performs a step 420 of opening the closed first switch. Thus, step 420 is a first deactivation step of opening the first switch that connects the first signal line to the intermediate node.

Thus, one embodiment of a disconnection process 401 comprises opening 410 the second switch; and, after opening the second switch, opening 420 at least one of the one or more first switches. For the avoidance of doubt, it is noted that to execute the disconnection process 401 (when including steps 410 and 420), steps 410 and 420 are performed in sequence, i.e., one after the other. Additional sub-steps may be performed between the performance of these steps where relevant.

The method 400 also performs a step 430 of closing the desired first switch, where the desired first switch connects the desired signal line to the intermediate node. Thus, step 430 is a first activation step of closing the first switch that connects the second signal line to the intermediate node. Step 430 may be performed before, after or simultaneously with step 420.

The method 400 subsequently performs a step 440 of closing the second switch. More precisely, step 440 is performed after both steps 420 and 430 are complete.

Thus, the connection process 402 comprises closing 430 at least one of the one or more first switches and after closing the at least one of the one or more first switches, closing 440 the second switch. For the avoidance of doubt, it is noted that to execute the connection process 402, steps 430 and 440 are performed in sequence, i.e., one after the other. Additional sub-steps may be performed between the performance of these steps where relevant.

For the avoidance of doubt, it is noted that to execute overall method 400, steps 410, 420, 430 and 440 are performed in sequence, i.e., one after the other. Additional sub-steps may be performed between the performance of these steps where relevant. It is noted that steps 410, 420 provide an example of a disconnection process, which is itself an embodiment. Similarly, steps 430 and 440 provide an example of a connection process, which is itself an embodiment.

In some examples, the second switch (of each switching device) comprises a transmission gate. In particular, the/each second switch may comprise a matched transmission gate, e.g., one designed such that the capacitances of two symmetric FETs are equal or near-equal.

Fig. 5 illustrates one example of a suitable switch design for acting as the second switch 320.

The illustrated second switch takes the form of a transmission gate, which is a parallel circuit of an n-channel MOSFET 510 and a p-channel MOSFET 520, i.e., two symmetric MOSFETS. A respective control signal $V_{C1}$, $\overline{V_{C1}}$ is applied to the gate of each MOSFET to control its conductivity, i.e., to close or open each MOSFET. The voltages of the control signal have magnitudes, such that the gate-drain capacitances and gate-source capacitances of the n-channel MOSFET 510 and the p-channel MOSFET 520 match. The gate capacitances will naturally vary with the gate-source and gate-drain voltages. The body of the n-channel MOSFET is connected to a voltage source supply Vss (e.g., a ground or reference voltage) and the body of the p-channel MOSFET is connected to a voltage drain supply $V_{DD}$ (e.g., a supply voltage).

It is possible to engineer the sizes of the two MOSFETs, such that the capacitances of the two symmetric MOSFETs are equal or near-equal. In this way, the charges in the n-MOS and p-MOS will have same absolute value but with a different sign. Thus, discharging of any charges from the n-MOS can go to the p-MOS and vice versa. In this way, no or negligible charge will be injected to the electrode from the activation and/or deactivation of the second switch.

However, although advantageous for reduced charge injection, one known problem of a transmission gate layout for a switch is that (at least because the body of each MOSFET is connected to a voltage source supply or voltage drain supply), each transistor must be able to withstand the supply voltage. This is currently only possible, in sub-micron technologies, for low voltages (e.g., <10V). Accordingly, it would not be advisable to simply make use of a transmission gate layout for the first switches of the switching device 100 illustrated in Fig. 1, as such first switches would not withstand the high voltages of the signal lines.

The proposed switching device is also advantageous in that the second switch, unlike any first switches, does not need to block high voltages, as it is controlled to only be open during reconfiguration of the first switches. It is therefore possible to model the second switch as having zero or negligible voltage difference across it, i.e., zero or negligible drain-source voltage. Therefore, it is possible to use low-voltage devices for the second switch. It is also possible to make use of relatively small gate-source voltages to control the operation of the second switch. If only small gate-voltages are needed, this in turn reduces the charges which need to flow to or away from the gate whilst turning the second switch on/off.

Although advantageous, it is not essential for the second switch to be configured as a transmission gate. For instance, the second switch may comprise a single transistor (e.g., a single MOSFET) or even a back-to-back switch arrangement (later described).

Preferably, each primary switch comprises one or more first FETs and each second switch comprises one or more second FETs. In such examples, it would be advantageous for a gate capacitance of each first FET is no less than 10 times the gate capacitance of any second FET, e.g., no less than 20 times the gate capacitance of any second FET. This approach will significantly reduce an amount of charge injection provided to the electrode when a signal line is to be disconnected (or connected), compared to a prior approach in which each first switch is connected to the electrode (such that charge injection from (de)activating the first switch travels to the electrode).

It will be appreciated that to reduce or minimize charge injection when the second switch is opened, it would be advantageous to keep the gate capacitance (i.e., the gate-source capacitance and the gate-drain capacitance) as low as possible. This reduces the amount of charge that will be passed to the electrode.

As a working example, preferably the gate-drain capacitance of each FET or transistor in the second switch is less than 1 pF, e.g., less than 500 fF, e.g., less than 100 fF. This keeps any possible charge injection from the second switch towards the electrode extremely low.

However, FETs with a very small gate capacitance and acceptable levels of on-resistance (with current technological restrictions) have a relatively low voltage rating (e.g., < 10V). Such FETs are therefore not suited for controlling a connection between a signal line for an electrode and any other node - i.e., for acting as a first switch - as they would likely become damaged during conventional use of the switching device.

The present disclosure proposes the use of one or more such FETs (with a small gate capacitance) for use in the second switch. This facilitates low charge injection to the electrode when the second switch is opened. The buffer capacitor $C_B$ maintains a voltage across the second switch to be substantially constant or only slowly changing, to significantly reduce a risk of damaging the second switch.

It is advantageous if the capacitance of the second switch (between its input at the intermediate node and its output connected to the electrode) is extremely small. This is because the voltage change at the electrode responsive to a voltage change at the intermediate node is responsive to this capacitance, e.g., as follows:

$$\Delta V_{electrode} = \frac{C_2}{C_2 + C_e} \Delta V_{INT} \tag{1}$$

where $\Delta V_{electrode}$ is the voltage change at the electrode, $C_2$ is the capacitance of the second switch between its input at the intermediate node and its output connected to the electrode, $C_e$ is the capacitance at the electrode and $\Delta V_{INT}$ is a change in voltage at the intermediate node.

As a working example, the capacitance of the second switch is preferably less than 1 pF, e.g., less than 500 fF, e.g. less than 100 fF.

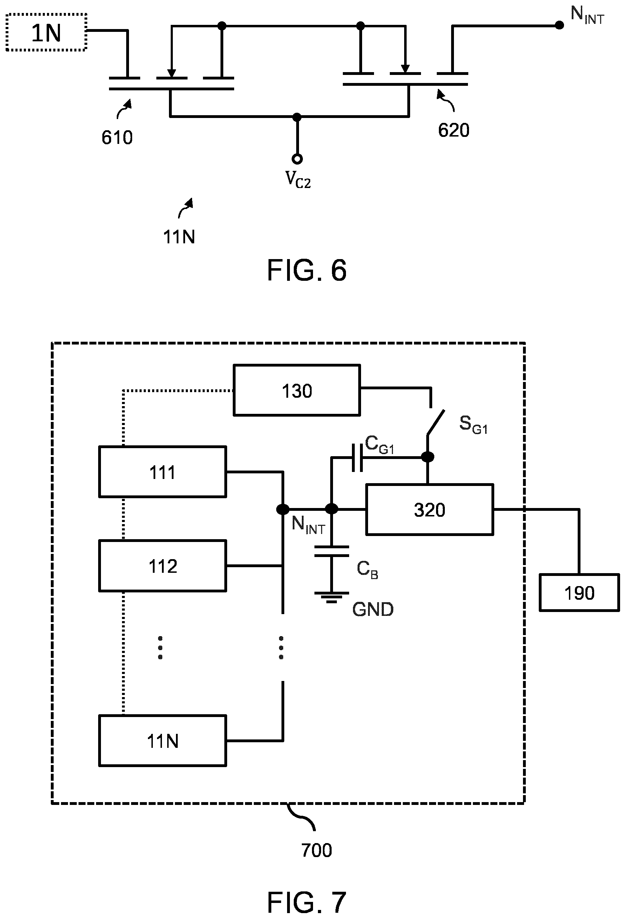

Fig. 6 illustrates a suitable example of a first switch 11N. The first switch comprises a back-to-back switch, which is designed for handling high voltages - i.e., has a high voltage rating.

More particularly, for high voltages, it is typical to use vertical/lateral double diffused MOS (LDMOS) transistors, which have a drain extension. That means the drain can handle higher voltages. However, the gate-source voltage is typically limited to a maximum or between 5 V and 7 V. Accordingly, to build a high-voltage switch (i.e., one able to withstand a voltage of a signal line), it is common to make use of a back-to-back switch. Alternative types of FETs can be used in a back-to-back switch to a similar effect.

In a back-to-back switch, two FETs (such as LDMOS transistors) are placed in series, connected via the sources. In order to open the switch, the source and gate are pulled to a ground or reference voltage Vss (if each FET is an n-channel FET) or to a signal line voltage $V_{DD}$ (if each FET is a p-channel FET). To close the switch, the source of each FET should be pulled up to the voltage of the signal line 1N (to which the switch is connected) and the gate to the sum of this voltage and a gate voltage. A relatively large charge injection is therefore produced whenever the back-to-back is opened or closed, as it is not just the gate-drain capacitance, but also the drain-source capacitance that needs to (dis)charge.

Controlling the gate voltage(s) of the first and second switches is a non-trivial task. In particular, the required gate voltage will change depending which signal line is connected by its respective first switch to the intermediate node.

One approach to at least partially overcoming this issue is to connect the gate of each transistor of the second switch to the electrode or an intermediate node by a respective gate-connecting capacitor. This will cause the voltage at the gate to follow the voltage at the electrode or intermediate node. A supplementary control voltage can then be applied by the control arrangement to control the activation or deactivation of the transistor(s) and therefore each second switch.

Fig. 7 illustrates one example of a switching device 700, for a proposed ion trap device, that comprises one or more gate-connecting capacitors $C_{G1}$. In this example, each gate-connecting capacitor $C_{G1}$ is connected to the intermediate node.

Although Fig. 7 illustrates only a single gate-connecting capacitor $C_{G1}$, it will be appreciated that, in practice, the gate of each transistor may be connected by a respective gate-connecting capacitor.

To control the operation of the gate, for each transistor in the second switch, a respective gate switch $S_{G1}$ connects the gate of said transistor to a respective control signal line (provided by a respective control voltage supply of the control arrangement). The operation of the gate switch $S_{G1}$ is controlled by the control arrangement to thereby selectively connect the gate to a driving voltage.

The use of a gate-connecting capacitor also has the advantage in that the gate voltage is stored at the capacitor. Thus, the open/closed state of the switch will be maintained (even if the gate is subsequently decoupled from a driving voltage using switch $S_{G1}$).

This is particularly advantageous for some forms of (control) voltage supplies for producing voltages for driving the gate(s), such as level shifters. In particular, if there are any rapid voltage transients of a signal powering the level shifter, then the level shifter will constantly need to follow. A large capacitance thereby has to follow the input signal attached to the electrode. If the information whether to open or close the second switch is stored in the gate connecting capacitor $C_{G1}$ and the level shifter is detached or decoupled (using the gate switch $S_{G1}$), this problem is avoided.

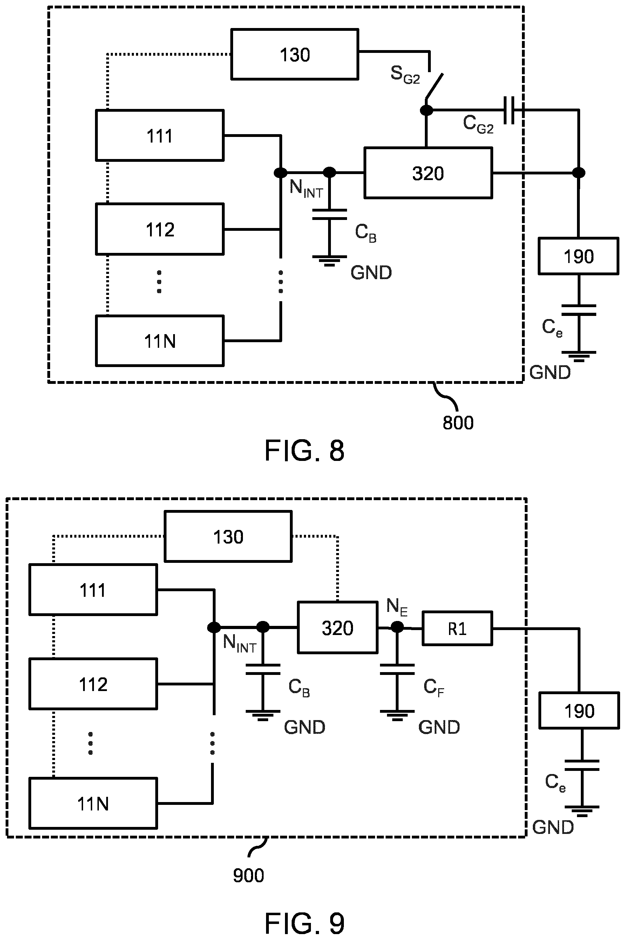

Fig. 8 illustrates another example of a switching device 800, for a proposed ion trap device, that comprises one or more gate-connecting capacitors $C_{G2}$. This example differs from the previously disclosed example in that each gate-connecting capacitor $C_{G2}$ is connected to the electrode.

The switching device 800 illustrated by Fig. 8 may incur higher charge injection to the electrode (due to gate-connecting capacitor(s)) than the switching device 700 illustrated by Fig. 7, but may provide a more linear operation, which is therefore easier to control and/or compensate, e.g., by matching charge injection.

Fig. 9 illustrates another switching device 900, for a proposed ion trap device, comprising one or more additional optional elements, any combination of which may be incorporated into any herein described embodiment to advantage.

The switching device 900 further comprises a resistive arrangement R1 connected between the second switch 320 and the electrode 190.

This embodiment recognizes that the discharge of a gate capacitance (i.e., the charge injection) that causes charge to move (more) towards the signal line side or (more) towards the electrode side can be controlled to a certain degree. More particularly, if there is a low-ohmic connection on one side but not on the other, more charges will move to the low-ohmic side than to the high-ohmic side. It is therefore possible to add an artificial resistance (i.e., the resistive arrangement R1) in series with the electrode 190 to direct charges away from the electrode 190.

A resistance of the resistive arrangement may be no more than 0.2 times (and preferably no more than 0.1 times) a resistance of each or any first switch when closed, i.e., an $R_{DS\_ON}$ of each first switch. The additional thermal noise of such a relatively small resistive arrangement (compared to the resistance of the first switches) may be considered acceptable.

It is also noted that electrode will have an inherent capacitance (e.g., between itself and a ground or reference voltage), and can therefore be represented as a capacitor. The resistive arrangement R1 and the capacitance of the electrode will also act as a low-pass filter, reducing the effect on the electrode voltage of any thermal noise introduced.

To further reduce charge injection towards the electrode 190, a filtering capacitor $C_F$ may be connected between an electrode node ($N_E$) and a ground or reference voltage GND. The electrode node $N_E$ is located between the second switch and the electrode. More preferably, the electrode node $N_E$ is connected between the second switch and the resistive arrangement R1 (if present).

This filtering capacitor attracts more charges from the second switch, particularly during a charge injection when (de)activating the second switch, but still reducing a voltage change at the electrode.

If both the resistive arrangement R1 and the filtering capacitor $C_F$ are present, then they together form a low pass filter for further reducing or mitigating any voltage rise at the electrode 190.

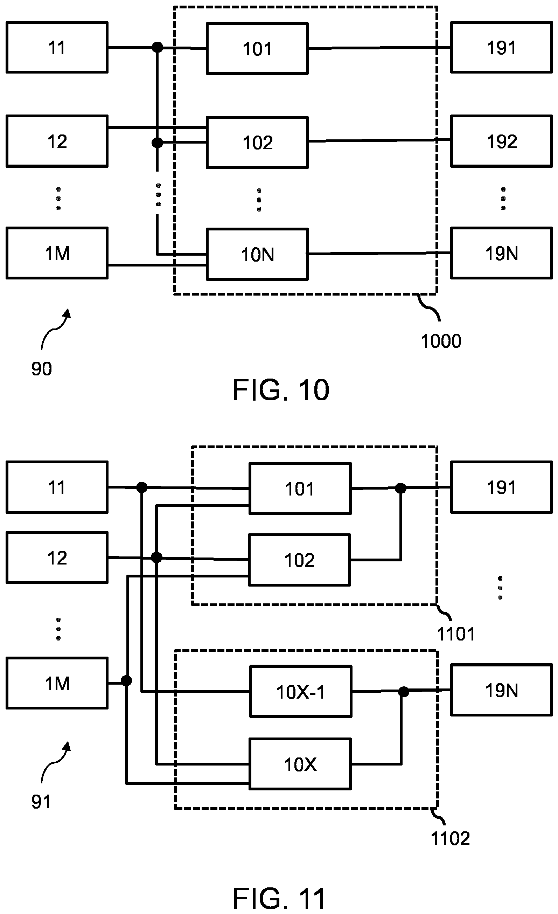

Fig. 10 illustrates a switching device arrangement 1000 for a proposed ion trap device comprising a plurality of herein proposed switching devices 101, 102, ..., 10N. Each switching device is configured to control a connection between one or more signal lines 11, 12, ..., 1M and an electrode 191, 192, ..., 19N of an ion trap device. In the illustrated example, each switching device controls a connection between the signal line(s) and a respective electrode, such that each electrode connects to only a single switching device.

The number of signal lines and the number of electrodes may be different. Thus, M does not need to equal N. It is not essential that each switching device facilitates the connection of each signal line to its respective electrode. Rather, each switching device 101, 102, ..., 10N may control the connection of a respective subset (e.g., not all) of one or more signal lines to its respective electrode 191, 192, ..., 19M.

Fig. 10 also illustrates a portion of an ion trap device 90 according to embodiments. The ion trap device 90 comprises the switching device arrangement 1000, the plurality of electrodes and the one or more signal lines.

The number of electrodes in the ion trap device may be defined by the use-case scenario, and may comprise hundred, thousands, tens of thousands or millions of electrodes.

Fig. 11 illustrates another switching device arrangement 1101, 1102 for a proposed ion trap device comprising a plurality of herein proposed switching devices 101, 102, 10X-1, 101X. In this approach, a single switching device arrangement 1101, 1102 comprises a plurality of switching devices 101, 102, 10X-1, 10X that are connected to a same electrode 191, 19N.

In such examples, the switching devices 191, 192 of a same switching device arrangement may be controlled or operated synchronously. In particular, if switching from connecting the electrode from a first signal line 11 (only connectable via a first switching device 101) to an M-th signal line 1M (only connectable via a second switching device 102), then the control arrangement of the first switching device 101 may switch off the second switch, and then the (relevant) first switch of the first switching device 101, before the second switching device switches on the (relevant) first switch and then the second switch of the second switching device.

Fig. 11 also illustrates a portion of an ion trap device 91 according to embodiments. The ion trap device 91 comprises one or more, e.g., a plurality of, switching device arrangements 1101, 1102, the plurality of electrodes and the one or more signal lines.

The number of electrodes in the ion trap device may be defined by the use-case scenario, and may comprise hundred, thousands, tens of thousands or millions of electrodes.

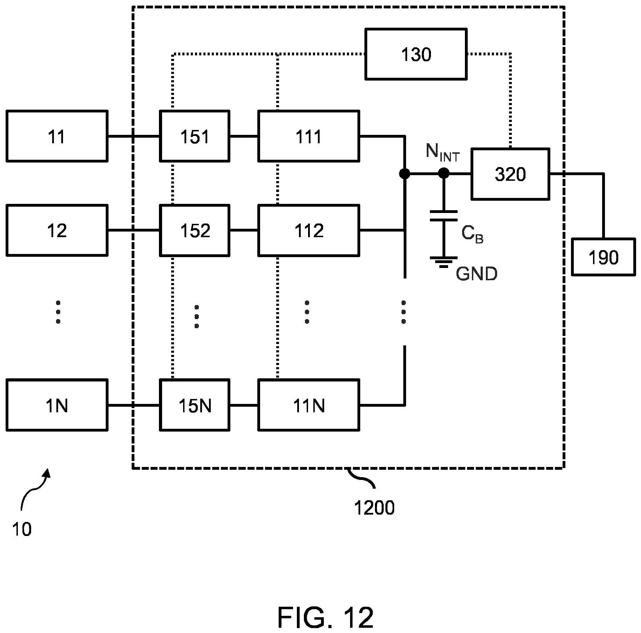

Fig. 12 illustrates another switching device 1200 comprising one or more additional optional elements, any combination of which may be incorporated into any herein described embodiment to advantage.

It is further recognized that, in practice, each signal line is likely to connect to more than one electrode via respective switching devices. Each first switch of each driving arrangement will not just produce charge injection towards the electrode (of the driving arrangement) but also back towards the signal line to which said first switch is connected.

It can be assumed that, for any given switching device, most of this charge injection will be absorbed by the relevant signal line, but it is possible that some of it will propagate towards a neighboring switching device (e.g., connected to a neighboring electrode). This possibility of charge injection into a neighboring switching device is particularly significant if the first switches of a large number of switching devices switch state (near-)simultaneously. The sum charge injections from many first switches changing state may inject such a significant charge that it becomes problematic for other electrodes that are still connected to a signal line by a respective first switch.

One way of tackling this problem is to provide, for each first switch 111, 112, ..., 11N, a third switch 151, 152, ..., 15N that controllably connects the respective signal line 11, 12, ..., 1Nto the first switch. Thus, each first switch 111, 112, ..., 11N may be associated with a respective or corresponding third switch 151, 152, ..., 15N.

The control arrangement 130 may be further configured to controllably close and open the third switch. More particularly, the control arrangement may be configured to, responsive to an indication to open a desired one of the one or more first switches, open the third switch associated with the desired one of the one or more first switches before opening the desired one of the one or more first switches. The deactivation of the third switch may be performed after the deactivation of the second switch.

This approach reduces a risk of charge injection towards the signal line from the relevant first switch.

Each third switch may be configured or designed analogously to any herein disclosed second switch, e.g., in the form of a transmission gate or the like.

However, after opening a third switch, it is not likely that this third switch will be able to handle a large voltage difference across it if/when the signal line beings to provide a new voltage level (e.g., begins to ramp up a voltage provided to the third switch for provision to the electrode). Therefore, the third switch has to be closed again before any provision of voltage.

One approach to (further) mitigate this problem could (when the signal line begins to provide a new voltage level), closing the third switch slowly so that all charges can be absorbed by the signal line.

Another approach is to use another switch to charge the intermediate node to a specific voltage as the signal line begins to provide the new voltage level. When that additional switch is subsequently opened and the third switch closed, the voltage at the intermediate node shall be the voltage provided by the signal line.

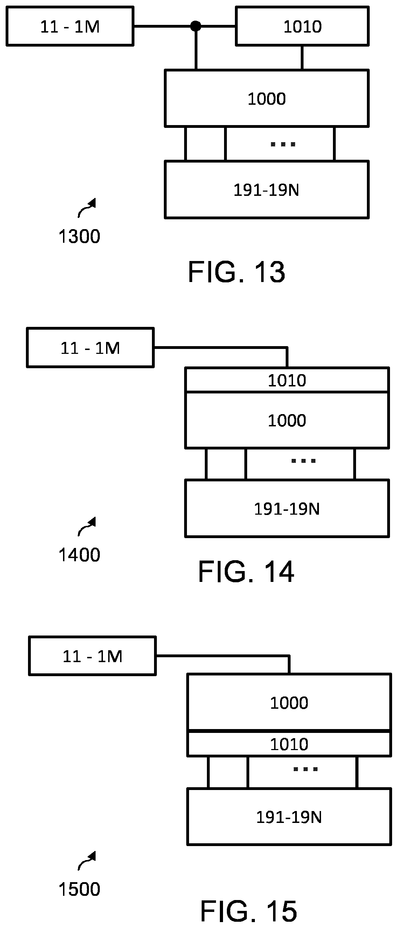

Figs. 13 to 15 illustrate further optional configurations for any herein proposed switching device.

In particular, each switching device may be associated with one or more voltage supplies, such as level shifters configured to perform level shifting of a voltage provided by either a signal line (connected to a first switch of the switching device) or the electrode to produce a voltage for biasing a gate of a transistor in the first and/or second switch(es).

Thus, there may be provided one or more voltage supplies, such as one or more level shifters, for generating one or more voltages for controlling the operation of each first and/or second switch in each switching device. The level shifter(s) may together form a level shifter arrangement 1010.

Each level shifter may be embodied, for instance, as a source follower or common-drain amplifier. Other suitable examples of level shifters will be readily apparent to the appropriately skilled person.

In some approaches, at least one level shifter is configured to perform level shifting of a voltage provided by a signal line to produce a voltage for controlling a transistor of the second switch. For instance, the total number of level shifters (for the entire switching device arrangement 1010) is proportional to the number of signal lines 11-11M for connecting to any of the electrodes. In particular, the number of level shifters may be no less than the number of signal lines multiplied by the number of transistors in any second switch (assuming that each second switch comprises a same number of transistors).

In other approaches, at least one level shifter is configured to perform level shifting of a voltage at an electrode to produce a voltage for controlling a transistor of the second switch. For instance, the number of level shifters is proportional to the number of electrodes. In particular, the number of level shifters may be no less than the number of electrodes multiplied by the number of transistors in any second switch (assuming that each second switch comprises a same number of transistors). More specifically, there may be a level shifter for each transistor of each second switch, wherein each level shifter performs level shifting of a voltage at the electrode to which said second shift connects.

In yet other approaches, at least one level shifter is configured to perform level shifting of a voltage at an intermediate node to produce a voltage for controlling a transistor of the second switch. The number of level shifters is proportional to the number of intermediate nodes. In particular, the number of level shifters may be no less than the number of intermediate nodes multiplied by the number of transistors in any second switch (assuming that each second switch comprises a same number of transistors). More specifically, there may be a level shifter for each transistor of each second switch, wherein each level shifter performs level shifting of a voltage at the intermediate node to which said second shift connects.

Of course, it is possible that a combination of some or all of these approaches for configuring a level shifter may be employed. For instance, there may be a first set of level shifters that each perform level shifting of a voltage provided by a signal line, a second set of level shifters that each perform level shifting of a voltage provided by an electrode; and/or a third set of level shifters that each perform level shifting of a voltage provided by an intermediate node.

Fig. 13 illustrates a first example configuration 1300 that includes a level shifter arrangement 1010.

In this first example configuration, the total number of level shifters (for the entire switching device arrangement 1010) is proportional to the number of signal lines 11-11M for connecting to any of the electrodes.

In this first example configuration, the level shifter arrangement is located on a different die to the switching device arrangement 1000. Thus, the level shifter(s) for each switching device (of the switching device arrangement) is located on a different die to the respective switching device.

This will significantly reduce the current or power consumption near the electrodes, thereby reducing the generation of (stray) magnetic fields in the vicinity of the electrodes that may otherwise influence any ions.

However, this approach can significantly complicate wiring, and the area occupied by the level shifter arrangement can be significant if a large number of signal lines are to be connected to the electrodes.

Fig. 14 illustrates a second example configuration 1400 that includes a level shifter arrangement 1010. In this second example configuration, the total number of level shifters (for the entire switching device arrangement 1010) is proportional to the number of signal lines 11-11M for connecting to any of the electrodes or the number of intermediate nodes.

In this second example configuration, the level shifter arrangement is located on a same die to the switching device arrangement 1000. The advantage compared to the first example configuration is that of significantly simpler wiring between the level shifter arrangement and the transistors of the second switches. However, this comes at the expense of increased space occupancy on a same die, and slightly increased power consumption near the electrodes (increasing a number of stray electric fields).

Fig. 15 illustrates a third example configuration 1500 that includes a level shifter arrangement 1010.

In this third example configuration, the total number of level shifters (for the entire switching device arrangement 1010) is proportional to the number of electrodes. More particularly, there is provided a level shifter for each transistor of each second switch, wherein each level shifter performs level shifting of a voltage at the electrode to which said second shift connects.

As the number of electrodes is likely to be much higher than the number of signal lines, the current consumption of the level shifters will start to play a role. However, the third example configuration is a good approach for multiplexing a large number of signal lines onto a single electrode, because (in this case) it is possible to perform multiplexing in the digital domain and it is only necessary to level shift the control voltage.

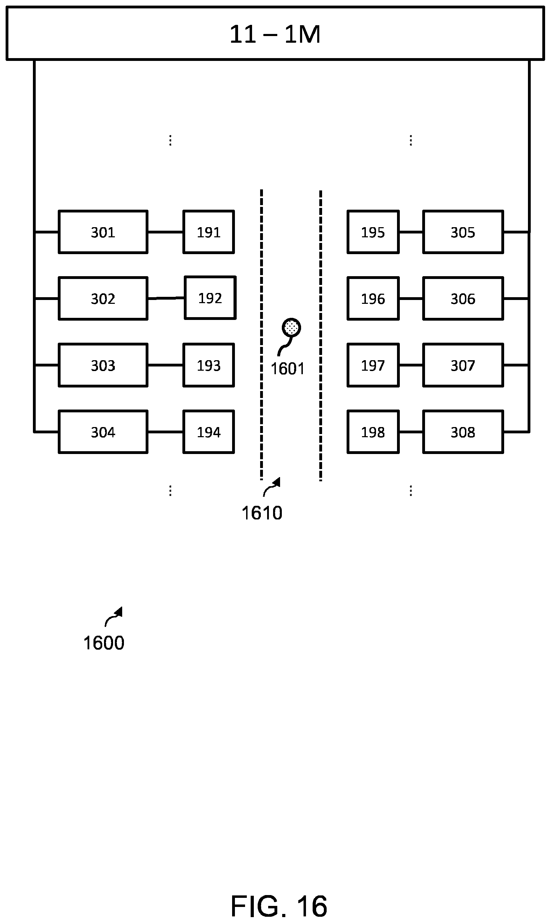

Fig. 16 conceptually illustrates a portion of a proposed ion trap device 1600.

The ion trap device is configured for trapping and moving an ion 1601, e.g., within an environment or region 1610, which can be called a "containment region", in which the ion is to be held. More particularly, the ion trap quantum system may further include an RF system (not illustrated in Fig. 16). The RF system is configured to provide an RF containment field to contain the ion in the (containment) region 1610, as is well established in the art. The RF containment field may, for instance, define the environment or region 1610 in which the ion can be held.

The region 1610 may be sub-divided into a plurality of different areas or zones, each designated for the performance of different quantum computing tasks (e.g., storage, processing and/or readout).

The ion trap device 1600 comprises a plurality of electrodes 191, 192, 193, 194, 195, 196, 197, 198. By controlling the voltage at each electrode, the position of the ion 1601 within the region 1610 can be controlled, e.g., to move the ion between the different areas or zones of the region. To facilitate the controlling of the voltage at each electrode, the ion trap device comprises a switching device 301, 302, 303, 304, 305, 306, 307, 308 for each electrode. Each switching device selectively connects one or more signal lines 11-1M to the corresponding electrode. By controlling the voltage provided by the signal line connected to each electrode and/or controlling which signal line connects to the electrode, a position of the ion 1601 within the region 1610 can be precisely controlled.

More particularly, generally a voltage applied to an electrode can be a "steady-state" voltage (in which the electric field is held in a steady state) in order to maintain a position of the ion. During this time, a first signal line drives the electrode. If the ion is to be moved, the voltage at the electrode is switched to a moving voltage, e.g., according to a predetermined pattern, in accordance with a movement protocol for moving the ion. During this time, a second signal line drives the electrode, e.g., with a variable voltage or pattern of voltages. There is therefore a need for smooth switching, with minimal noise or voltage spikes, from connecting the electrode to the first signal line to a second signal line (and back again). The proposed switching device provides such a mechanism.

Approaches for controlling the location of an ion 1601 within a (containment) region 1610 by the controlled application of voltages to electrodes are well known in the art, and are not described in detail for the sake of conciseness.

Accordingly, embodiments also provide an ion trap device for trapping and moving an ion. The ion trap device includes a plurality of electrodes, a plurality of switching devices and one or more signal lines. Each switching device selectively connects one or more of the signal lines to a respective, different electrode. The ion trap device further comprises a control system for controlling the operation of the switching devices and the signal line/supplies. The ion trap quantum system may further include an RF system configured to provide an RF containment field to contain the ion, as is well established in the art.

Correspondingly, there is also provided a method for moving an ion held by an ion trap device, the method comprising controlling a connection between one or more signal lines and an electrode of the ion trap device using a previously described method. The method for moving the ion may include one or more further steps required for controlling the operation of the signal line/supplies for manipulating the position of the ion, as is well established in the art.

In addition to the above described examples, the following examples are disclosed.

Example 1. An ion trap device comprising at least one switching device for controlling a connection between one or more signal lines and an electrode of the ion trap device, each switching device comprising:

one or more first switches, each first switch controllably connecting a respective, different one of the one or more signal lines to a same intermediate node;
a second switch controllably connecting the intermediate node to the electrode of the ion trap device; and
a control arrangement configured to controllably close and open each first switch and the second switch, wherein the control arrangement is configured to perform at least one of a disconnection process and a connection process, wherein:

the disconnection process comprises opening the second switch; and
the connection process comprises closing at least one of the one or more first switches and after closing the at least one of the one or more first switches, closing the second switch.

Example 2. The ion trap device of example 1, wherein the disconnection process further comprises, after deactivating the second switch, deactivating at least one of the one or more first switches.

Example 3. The ion trap device of example 1 or 2, wherein each switching device further comprises a buffer capacitor connected between the intermediate node and a ground or reference voltage.

Example 4. The ion trap device of any one of examples 1 to 3, wherein the disconnection process is performed responsive to an indication to deactivate a desired one of the one or more first switches, and wherein the at least one of the one or more switches is the desired one of the one or more first switches.

Example 5. The ion trap device of any one of examples 1 to 4, wherein:

the one or more first switches comprises a plurality of first switches; and
a first signal line of the one or more signal lines defines a first voltage to be applied to the electrode of the ion trap device;
a second signal line of the one or more signals defines a second voltage to be applied to the electrode of the ion trap device; and
the first signal line is different from the second signal line.

Example 6. The ion trap device of example 5, wherein, for each switching device, the control arrangement is configured to, responsive to an indication to change from the first signal line to the second signal line:

open the second switch;
after opening the second switch, perform:

a first deactivation step of opening the first switch that connects the first signal line to the intermediate node; and
a first activation step of closing the first switch that connects the second signal line to the intermediate node; and

after performing the first deactivation step and the first activation step, close the second switch.

Example 7. The ion trap device of any one of examples 1 to 6, wherein the second switch of each switching device comprises a transmission gate.

Example 8. The ion trap device of any one of examples 1 to 7, wherein, for each switching device, each primary switch comprises one or more first FETs and the second switch comprises one or more second FETs.

Example 9. The ion trap device of claim 0, wherein, for each switching device, a gate capacitance of each first FET is no less than 10 times the gate capacitance of any second FET.

Example 10. The ion trap device of any one of claims 8 or 9, wherein, for each switching device, the gate of each second FET of the second switch is connected to the electrode or to the intermediate node by a respective gate-connecting capacitor.

Example 11. The ion trap device of any one of examples 8 to 10, wherein each switching device further comprises, for each second FET of the second switch, a respective gate switch connecting the gate of the second FET to a respective control voltage supply.

Example 12. The ion trap device of example 11, wherein each switching device further comprises each respective control voltage supply, wherein each respective control voltage supply comprises a level shifter configured to perform level shifting, to produce a voltage for biasing the gate of the respective second FET, of a voltage provided either by a control voltage supply connected to a first switch or at the electrode.

Example 13. The ion trap device of any one of examples 1 to 12, wherein the at least one switching device comprises a plurality of switching devices.

Example 14. A method for controlling a connection between one or more signal lines and an electrode of an ion trap device using the ion trap device of any one of examples 1 to 13, the method comprising, responsive to an indication to open a desired one of the one or more first switches of a target switching device:

opening the second switch of the target switching device; and
after opening the second switch, opening the desired one of the one or more first switches of the target switching device.

Example 15. A method for moving an ion held by an ion trap device, the method comprising controlling a connection between one or more signal lines and an electrode of the ion trap device using the method of example 14.

Example 16. The ion trap device of any one of examples 1 to 13, wherein each switching device further comprises a resistive arrangement connected between the second switch and the electrode.

Example 17. The ion trap device of any one of examples 1 to 15 or 16, wherein each switching device further comprises a filtering capacitor connected between an electrode node and a ground or reference voltage, wherein the electrode node is located between the second switch and the electrode.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and switching devices including its preferred embodiments as outlined in the present document may be used stand-alone or in combination with the other methods and switching devices disclosed in this document. In addition, the features outlined in the context of a switching device are also applicable to a corresponding method, and vice versa. Furthermore, all aspects of the methods and switching devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

**Claims**

1.  An ion trap device comprising at least one switching device (100, 600, 700) for controlling a connection between one or more signal lines (11, 12, 1N) and an electrode (190) of the ion trap device, each switching device comprising:

    one or more first switches (111, 112, 11N), each first switch controllably connecting a respective, different one of the one or more signal lines to a same intermediate node ($N_{INT}$);
    a second switch (121) controllably connecting the intermediate node to the electrode of the ion trap device; and
    a control arrangement (130) configured to controllably close and open each first switch and the second switch, wherein the control arrangement is configured to perform at least one of a disconnection process and a connection process, wherein:

    the disconnection process comprises opening (410) the second switch; and
    the connection process comprises closing (430) at least one of the one or more first switches and after closing the at least one of the one or more first switches, closing (440) the second switch.

2. The ion trap device of claim 1, wherein the disconnection process further comprises, after opening the second switch, opening (420) at least one of the one or more first switches.

3. The ion trap device of claim 1 or 2, wherein each switching device further comprises a buffer capacitor ($C_B$) connected between the intermediate node and a ground or reference voltage.

4. The ion trap device of any one of claims 1 to 3, wherein the disconnection process is performed responsive to an indication to deactivate a desired one of the one or more first switches, and wherein the at least one of the one or more switches is the desired one of the one or more first switches.

5. The ion trap device of any one of claims 1 to 4, wherein:

   the one or more first switches comprises a plurality of first switches; and
   a first signal line of the one or more signal lines defines a first voltage to be applied to the electrode of the ion trap device;
   a second signal line of the one or more signals defines a second voltage to be applied to the electrode of the ion trap device; and
   the first signal line is different from the second signal line.

6. The ion trap device of claim 5, wherein, for each switching device, the control arrangement (130) is configured to, responsive to an indication to change from the first signal line to the second signal line:

   open (310) the second switch;
   after opening the second switch, perform:

      a first deactivation step (320) of opening the first switch that connects the first signal line to the intermediate node; and
      a first activation step (330) of closing the first switch that connects the second signal line to the intermediate node; and

   after performing the first deactivation step and the first activation step, close (340) the second switch.

7. The ion trap device of any of claims 1 to 6, wherein the second switch of each switching device comprises a transmission gate.

8. The ion trap device of any of claims 1 to 7, wherein, for each switching device, each primary switch comprises one or more first FETs (510, 520) and the second switch comprises one or more second FETs (410, 420).

9. The ion trap device of claim 8, wherein, for each switching device, a gate capacitance of each first FET is no less than 10 times the gate capacitance of any second FET.

10. The ion trap device of any of claims 8 or 9, wherein, for each switching device, the gate of each second FET of the second switch is connected to the electrode or to the intermediate node by a respective gate-connecting capacitor ($C_{G1}$, $C_{G2}$).

11. The ion trap device of any of claims 8 to 10, wherein each switching device further comprises, for each second FET of the second switch, a respective gate switch ($S_{G1}$, $S_{G2}$) connecting the gate of the second FET to a respective control voltage supply.

12. The ion trap device of claim 11, wherein each switching device further comprises each respective control voltage supply,
   wherein each respective control voltage supply comprises a level shifter (1010) configured to perform level shifting, to produce a voltage for biasing the gate of the respective second FET, of a voltage provided either by a control voltage supply connected to a first switch or at the electrode.

13. The ion trap device of any of claims 1 to 12, wherein the at least one switching device comprises a plurality of switching devices.

**14.** A method (300) for controlling a connection between one or more signal lines and an electrode of an ion trap device using the ion trap device (100, 600, 700, 800) of any of claims 1 to 13, the method comprising, responsive to an indication to open a desired one of the one or more first switches of a target switching device:

opening (310) the second switch of the target switching device; and
after opening the second switch (320), opening the desired one of the one or more first switches of the target switching device.

**15.** A method for moving an ion held by an ion trap device, the method comprising controlling a connection between one or more signal lines and an electrode of the ion trap device using the method of claim 14.

**Amended claims in accordance with Rule 137(2) EPC.**

**1.** An ion trap device comprising at least one switching device (100, 600, 700) for controlling a connection between one or more signal lines (11, 12, 1N) and an electrode (190) of the ion trap device, each switching device comprising:

one or more first switches (111, 112, 11N), each first switch controllably connecting a respective, different one of the one or more signal lines to a same intermediate node ($N_{INT}$);
a second switch (121) controllably connecting the intermediate node to the electrode of the ion trap device; and
a control arrangement (130) configured to controllably close and open each first switch and the second switch, **characterized in that** the control arrangement is configured to perform a disconnection process and a connection process, wherein:

the disconnection process comprises opening (410) the second switch; and
the connection process comprises closing (430) at least one of the one or more first switches and after closing the at least one of the one or more first switches, closing (440) the second switch.

**2.** The ion trap device of claim 1, wherein the disconnection process further comprises, after opening the second switch, opening (420) at least one of the one or more first switches.

**3.** The ion trap device of claim 1 or 2, wherein each switching device further comprises a buffer capacitor ($C_B$) connected between the intermediate node and a ground or reference voltage.

**4.** The ion trap device of any one of claims 1 to 3, wherein the disconnection process is performed responsive to an indication to deactivate a desired one of the one or more first switches, and wherein the at least one of the one or more switches is the desired one of the one or more first switches.

**5.** The ion trap device of any one of claims 1 to 4, wherein:

the one or more first switches comprises a plurality of first switches; and
a first signal line of the one or more signal lines defines a first voltage to be applied to the electrode of the ion trap device;
a second signal line of the one or more signals defines a second voltage to be applied to the electrode of the ion trap device; and
the first signal line is different from the second signal line.

**6.** The ion trap device of claim 5, wherein, for each switching device, the control arrangement (130) is configured to, responsive to an indication to change from the first signal line to the second signal line:

open (310) the second switch;
after opening the second switch, perform:

a first deactivation step (320) of opening the first switch that connects the first signal line to the intermediate node; and
a first activation step (330) of closing the first switch that connects the second signal line to the intermediate node; and

after performing the first deactivation step and the first activation step, close (340) the second switch.

7. The ion trap device of any of claims 1 to 6, wherein the second switch of each switching device comprises a transmission gate.

8. The ion trap device of any of claims 1 to 7, wherein, for each switching device, each primary switch comprises one or more first FETs (510, 520) and the second switch comprises one or more second FETs (410, 420).

9. The ion trap device of claim 8, wherein, for each switching device, a gate capacitance of each first FET is no less than 10 times the gate capacitance of any second FET.

10. The ion trap device of any of claims 8 or 9, wherein, for each switching device, the gate of each second FET of the second switch is connected to the electrode or to the intermediate node by a respective gate-connecting capacitor $(C_{G1}, C_{G2})$.

11. The ion trap device of any of claims 8 to 10, wherein each switching device further comprises, for each second FET of the second switch, a respective gate switch $(S_{G1}, S_{G2})$ connecting the gate of the second FET to a respective control voltage supply.

12. The ion trap device of claim 11, wherein each switching device further comprises each respective control voltage supply,
wherein each respective control voltage supply comprises a level shifter (1010) configured to perform level shifting, to produce a voltage for biasing the gate of the respective second FET, of a voltage provided either by a control voltage supply connected to a first switch or at the electrode.

13. The ion trap device of any of claims 1 to 12, wherein the at least one switching device comprises a plurality of switching devices.

14. A method (300) for controlling a connection between one or more signal lines and an electrode of an ion trap device using the ion trap device (100, 600, 700, 800) of any of claims 1 to 13, the method comprising, responsive to an indication to open a desired one of the one or more first switches of a target switching device:

opening (310) the second switch of the target switching device; and
after opening the second switch (320), opening the desired one of the one or more first switches of the target switching device.

15. A method for moving an ion held by an ion trap device, the method comprising controlling a connection between one or more signal lines and an electrode of the ion trap device using the method of claim 14.

FIG. 1

FIG. 2

| 130 |
|-----|

| 11 |—| 111 | $N_{INT}$
| 12 |—| 112 |
| 1N |—| 11N |

| 320 |—| 190 |

$C_B$

GND

10

300

FIG. 3

FIG. 4

FIG. 5

FIG. 6

FIG. 7

FIG. 8

FIG. 9

FIG. 10

FIG. 11

FIG. 12

11 - 1M

1010

1000

· · ·

191-19N

1300

FIG. 13

11 - 1M

1010

1000

· · ·

191-19N

1400

FIG. 14

11 - 1M

1000

1010

· · ·

191-19N

1500

FIG. 15

FIG. 16

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/247386 A1 (BARNES COREY ANDREW [US] ET AL) 4 August 2022 (2022-08-04) * paragraph [0044]; figure 1 * * paragraphs [0055] - [0058]; figures 4-6 * * paragraphs [0069] - [0073]; figures 9, 10 * | 1-15 | INV. G06N10/40 ADD. G21K1/00 |
| A | US 2023/026029 A1 (DEEN DAVID A [US] ET AL) 26 January 2023 (2023-01-26) * the whole document * | 1 | |
| A | KAUSHAL V ET AL: "Shuttling-based trapped-ion quantum information processing", AVS QUANTUM SCIENCE, AMERICAN INSTITUTE OF PHYSICS, 2 HUNTINGTON QUADRANGLE, MELVILLE, NY 11747, vol. 2, no. 1, 4 March 2020 (2020-03-04), XP012254309, DOI: 10.1116/1.5126186 [retrieved on 2020-03-04] * page 10; figure 8 * * page 13, right-hand column; figure 12 * | 1 | TECHNICAL FIELDS SEARCHED (IPC) G06N G21K |
| A | JP 2009 277376 A (SHIMADZU CORP) 26 November 2009 (2009-11-26) * the whole document * | 1 | |

The present search report has been drawn up for all claims

| Place of search | Date of completion of the search | Examiner |
|---|---|---|
| The Hague | 29 May 2024 | Loiseleur, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 5895

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | | Publication date | Patent family member(s) | | Publication date |
|---|---|---|---|---|---|
| US 2022247386 | A1 | 04-08-2022 | CN | 114928356 A | 19-08-2022 |
| | | | EP | 4040344 A1 | 10-08-2022 |
| | | | JP | 2022119214 A | 16-08-2022 |
| | | | TW | 202303464 A | 16-01-2023 |
| | | | US | 2022247386 A1 | 04-08-2022 |
| US 2023026029 | A1 | 26-01-2023 | CN | 115694456 A | 03-02-2023 |
| | | | EP | 4125213 A1 | 01-02-2023 |
| | | | JP | 2023017746 A | 07-02-2023 |
| | | | TW | 202324930 A | 16-06-2023 |
| | | | US | 2023026029 A1 | 26-01-2023 |
| JP 2009277376 | A | 26-11-2009 | JP | 4941402 B2 | 30-05-2012 |
| | | | JP | 2009277376 A | 26-11-2009 |

EPO FORM P0459

For more details about this annex : see Official Journal of the European Patent Office, No. 12/82